(19) Europäisches Patentamt / European Patent Office / Office européen des brevets

(11) **EP 2 704 344 B1**

(12) **FASCICULE DE BREVET EUROPEEN**

(45) Date de publication et mention de la délivrance du brevet:
**11.11.2020 Bulletin 2020/46**

(51) Int Cl.:
***H04L 1/00*** *(2006.01)*

(21) Numéro de dépôt: **13181936.9**

(22) Date de dépôt: **28.08.2013**

(54) **Méthode d'optimisation des ressources d'une transmission de données et dispositif mettant en oeuvre la méthode**

Optimierungsmethode der Ressourcen einer Datenübertragung und Vorrichtung zur Umsetzung dieser Methode

Method for optimising resources of a data transmission and device implementing the method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2012 FR 1202339**

(43) Date de publication de la demande:
**05.03.2014 Bulletin 2014/10**

(73) Titulaire: **Thales**
**92400 Courbevoie (FR)**

(72) Inventeurs:
• **Gadat, Benjamin**
**31100 Toulouse (FR)**
• **Van Wambeke, Nicolas**
**31100 Toulouse (FR)**
• **Gineste, Mathieu**
**Toulouse (FR)**

(74) Mandataire: **Marks & Clerk France**
**Immeuble "Visium"**
**22, avenue Aristide Briand**
**94117 Arcueil Cedex (FR)**

(56) Documents cités:
**EP-A2- 1 296 494**

• **MATSUOKA H ET AL: "Adaptive modulation system with variable coding rate concatenated code for high quality multi-media communication systems", VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, vol. 1, 28 avril 1996 (1996-04-28), pages 487-491, XP010162435, DOI: 10.1109/VETEC.1996.503495 ISBN: 978-0-7803-3157-0**

## Description

Le domaine de l'invention est celui des systèmes de transmission de données sans fil et en particulier ceux pour lesquels le canal de transmission est soumis à des perturbations fortement variantes au cours du temps.

L'invention concerne plus particulièrement le domaine du codage canal et de l'optimisation des ressources d'une liaison de données par recherche d'un compromis efficace entre débit consommé et robustesse aux fluctuations du médium de transmission.

Le problème technique général visé par la présente invention est celui de l'adaptation d'une transmission de données aux fluctuations du canal de propagation. On connait la technique dite de codage et modulation adaptatifs, connue sous l'acronyme anglo saxon ACM (Adaptive Coding and Modulation), qui consiste à adapter le couple modulation, codage en fonction d'une information sur la qualité du canal de propagation. Cette technique est notamment utilisée dans les standards Wimax, UMTS, 3GPP/LTE ou encore DVB-S2. L'objectif de cette méthode est de déterminer les meilleurs paramètres de modulation et de codage pour garantir un niveau de qualité de service donné tout en optimisant le débit utile offert par le système.

La mise en œuvre de la méthode ACM dans un système de transmission nécessite la gestion de plusieurs types de modulation et plusieurs rendements d'un même code correcteur. Pour que l'optimisation débit/protection soit la plus fine possible et pour permettre une adaptation efficace aux variations du canal de propagation, il est nécessaire dans l'absolu de bénéficier d'un grand nombre de couples modulation, codage possible. Or cette nécessité se heurte aux limites technologiques car elle implique de disposer de ressources importantes en place mémoire pour notamment stocker les différentes abaques permettant de déduire la probabilité d'erreur associée à un couple modulation/codage en fonction du rapport signal à bruit mesuré sur le canal ou d'une autre métrique équivalente. En outre, un trop grand nombre de choix possibles peut également engendrer une instabilité de la boucle de contrôle qui réalise, à partir d'une mesure de la qualité de la liaison de transmission, l'adaptation des paramètres de modulation et codage et ainsi entrainer des délais dans les traitements réalisés qui peuvent être pénalisant dans un contexte temps-réel.

La mise en œuvre réelle de la méthode ACM est donc généralement effectuée par le biais d'un nombre limité de couples modulation/codage.

Cette granularité importante présente alors un inconvénient pour les performances du système. En effet, l'application de la méthode ACM vise à déterminer le couple modulation/codage qui permet de respecter une contrainte donnée de taux d'erreur en réception. Cependant, le choix retenu pour atteindre cet objectif entraine une diminution du débit utile et de l'efficacité spectrale du fait de la redondance ajoutée par le code correcteur. Le passage d'un couple modulation/codage à un autre peut entrainer une forte diminution du débit utile et de l'efficacité spectrale, du fait de la granularité importante.

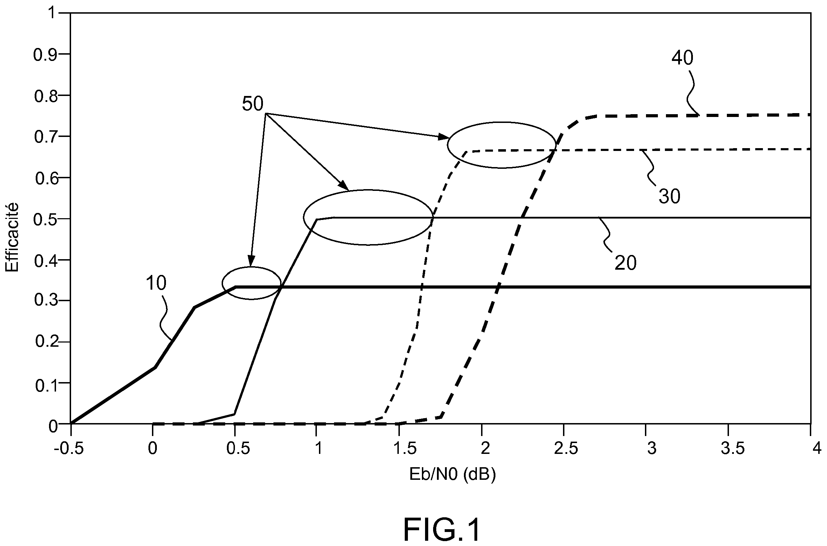

Cet inconvénient est illustré à la figure 1 qui représente l'efficacité spectrale en fonction du rapport signal à bruit pour quatre couples modulation/codage différents. La courbe 10 correspond à une modulation QPSK associée à un code de rendement 1/3. La courbe 20 correspond à une modulation QPSK associée à un code de rendement 1/2. La courbe 30 correspond à une modulation QPSK associée à un code de rendement 2/3. La courbe 40 correspond à une modulation QPSK associée à un code de rendement 3/4. Au delà d'une valeur seuil de rapport signal à bruit, l'efficacité spectrale atteint une valeur palier. L'efficacité spectrale maximale atteignable présente une différence parfois supérieure à 0,1 bits/sec/Hz selon les couples choisis. Les zones 50 de sur-efficacité potentielle sont identifiées sur les courbes. Elles correspondent à des cas où la protection ajoutée limite le débit utile de façon trop importante par rapport au gain en robustesse qui est obtenu.

Un exemple de méthode ACM est décrit dans la demande de brevet européen publiée sous le numéro EP1296494.

La présente invention propose une solution permettant de pallier aux inconvénients précités des méthodes dites ACM. L'étendue de la protection est définie par les revendications. Toute référence dans la description à des modes de réalisation ou des aspects ne tombant pas dans le champ de ces revendications est à considérer comme un exemple utile à la compréhension de l'invention.

La solution consiste à appliquer en amont du codage canal, au niveau de la couche MAC, un second code correcteur, préférentiellement un code à effacements de type MDS (Maximum Distance Separable), pour lequel le nombre de paquets de bits de redondance générés est déterminé de sorte à garantir un taux d'erreur maximum tout en limitant la baisse du débit utile et de l'efficacité spectrale, considérée au niveau de la couche MAC, par rapport à une solution ACM seule.

En outre, la méthode selon l'invention permet de conserver un nombre limité de couples modulation/codage tout en améliorant les performances et sans engendrer d'instabilités au niveau de la boucle d'adaptation des paramètres de la transmission en fonction de la qualité du canal.

L'invention a notamment pour objet une méthode d'optimisation des ressources d'une transmission de données caractérisée en ce qu'elle consiste, à partir d'un ensemble de couples de modulation et premier code correcteur disponibles, à :

- Déterminer, pour chacun desdits couples, le rendement maximum d'un second code correcteur à appliquer aux données à transmettre avant application du premier code correcteur et de la modulation pour que le taux d'erreur sur les données reçues après transmission sur un canal non parfait soit au plus égal à un taux d'erreur cible,

- ledit second code correcteur étant destiné à être appliqué au niveau de la couche d'accès au médium, de sorte à générer une pluralité de paquets de bits de redondance à partir d'une pluralité de paquets de bits de données reçus complétés par des sections de bourrage pour qu'ils aient tous la même taille,

- évaluer (411) une information représentative du ratio entre le nombre de bits en entrée de de la couche d'accès au medium (MAC) et le nombre de bits réellement transmis ou du débit de transmission nécessaire pour l'ensemble des solutions associant modulation, premier et second codes correcteurs,
- Sélectionner (412), parmi l'ensemble des solutions associant modulation, premier et second codes correcteurs, celle qui permet de maximiser ledit ratio ou de minimiser ledit débit de transmission,

Selon un aspect particulier de l'invention, ledit second code correcteur est un code « Maximum Separable Distance » dont le rendement maximum nécessaire pour respecter ledit taux d'erreur cible est déterminé en :

- Déterminant la probabilité théorique d'erreur du couple modulation, premier code correcteur associé au canal de transmission,
- Simulant le taux d'erreur d'une transmission, sur un canal modélisé par ladite probabilité théorique, de données protégées par ledit second code correcteur,
- Incrémenter le nombre de paquets de bits de redondance générés par ledit second code correcteur jusqu'à ce que le taux d'erreur simulé soit inférieur au taux d'erreur cible

Selon un aspect particulier de l'invention, ladite information représentative dudit ratio entre le nombre de bits en entrée de la couche d'accès au medium (MAC) et le nombre de bits réellement transmis est calculée à l'aide de la relation suivante : $E = 1 - (TEP_s.K.R)/(K+N_{PR})$, où $N_{PR}$ est le nombre de paquets de bits de redondance générés pour protéger K paquets de données et R est le rendement du premier code correcteur que multiplie le nombre de bits par symbole de la modulation.
Selon un aspect particulier de l'invention, ledit second code correcteur est un code en blocs, par exemple un code de Reed Solomon.
Selon un aspect particulier de l'invention, lesdits taux d'erreurs ($TEP_s$, $TEP_c$) sont des taux de paquets MAC erronés et le couple modulation, premier code correcteur retenu est transmis à la couche physique pour application dudit premier code correcteur et de ladite modulation aux paquets de données et aux paquets de redondance fournis par la couche d'accès au medium.
Selon un aspect particulier de l'invention, lesdits K paquets de données complétés sont entrelacés au préalable à l'application du second code correcteur.
Selon un aspect particulier de l'invention, lesdits paquets de bits de redondance sont de tailles égales entre elles et à celles desdits paquets de données complétés.
L'invention a également pour objet un système de transmission de données comprenant des moyens pour mettre en œuvre la méthode d'optimisation des ressources selon l'invention. Lesdits moyens peuvent comportent au moins une couche d'accès au medium, une couche physique et une information sur la qualité du canal de propagation.
L'invention a également pour objet un produit programme d'ordinateur comportant des instructions pour l'exécution de la méthode d'optimisation des ressources selon l'invention lorsque le programme est exécuté par un processeur.
D'autres caractéristiques et avantages de la présente invention apparaîtront mieux à la lecture de la description qui suit en relation aux dessins annexés qui représentent :

- La figure 1, un diagramme représentant l'efficacité spectrale en fonction du rapport signal à bruit pour différents couples de modulation et codage,
- La figure 2, un schéma d'un système de transmission de données adapté à mettre en œuvre la méthode selon l'invention,
- La figure 3, un schéma illustrant l'application d'un code dit « maximum distance separable » à une pluralité de paquets reçus au niveau de la couche d'accès au medium (MAC) d'un système de transmission,
- La figure 4, un organigramme décrivant la méthode selon l'invention permettant de déterminer le couple modulation, codage optimal ainsi que le nombre de paquets de redondance à générer au niveau de la couche MAC,
- La figure 5, un exemple de courbes de l'efficacité spectrale résultant en fonction du rapport signal à bruit montrant le gain de traitement obtenu par application de l'invention.

La méthode selon l'invention consiste à appliquer, sur les paquets reçus par la couche d'accès au medium (couche MAC), un code correcteur à effacements dit code MDS (Maximum Distance Separable). La propriété principale d'un tel code est que si K est le nombre de paquets d'information et N le nombre total de paquets transmis, incluant les paquets d'information et les paquets de redondance, n'importe quelle combinaison de K paquets parmi N permet de récupérer l'information contenue dans les K paquets utiles avant application du code correcteur. Le code correcteur utilisé peut être un code en blocs, par exemple un code de Reed Solomon. L'invention s'applique de façon avantageuse avec un code MDS mais reste également compatible d'autres types de codes correcteurs, par exemple un code LDPC (Low Density Parity Check) ou tout autre code correcteur permettant d'obtenir la même propriété.

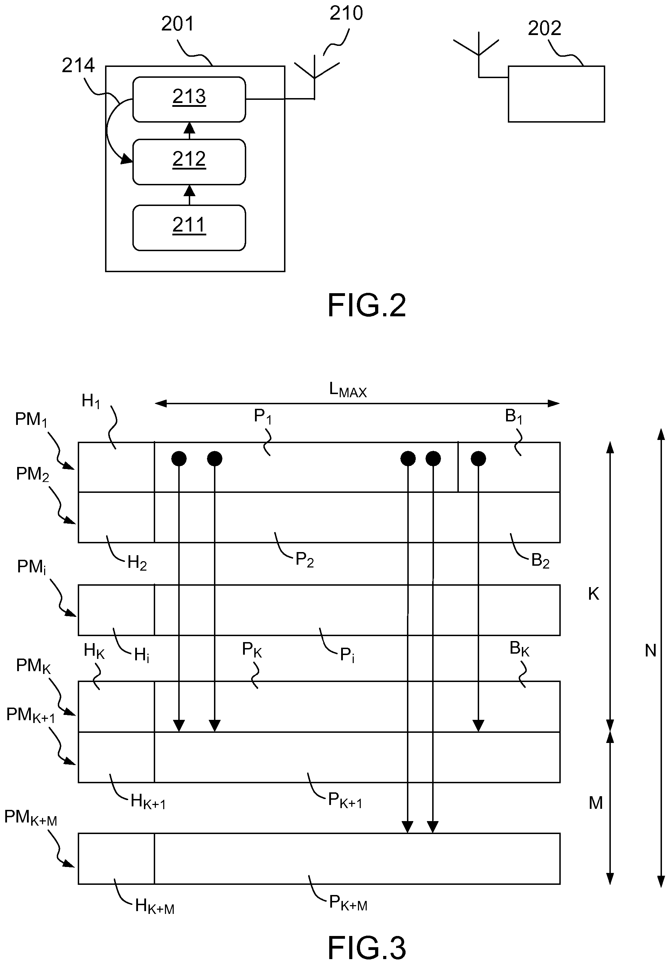

La figure 2 schématise un système de transmission de données pour la mise en œuvre de la méthode selon l'invention.

L'invention peut être mise en œuvre au sein d'un émetteur 201 comprenant des moyens 210, typiquement une antenne, pour transmettre des données via une liaison sans fil vers un récepteur 202.

L'émetteur 201 est apte à mettre en œuvre une méthode de modulation et codage adaptatifs pour transmettre les données provenant d'une application 211 implémentée dans l'émetteur 201 ou dans une entité séparée. Une telle application peut être une application de transmission de voix, d'image ou de vidéo ou encore de données textuelles. Les paquets de données générés par l'application 211 sont transmises à une couche d'accès au medium 212 ou couche MAC puis à une couche physique 213 chargée, notamment, de mettre en forme les données pour les transmettre sur le canal physique. En particulier, une modulation et un codage canal appropriés sont appliqués à ce niveau aux paquets transmis par la couche MAC. En fonction d'une mesure 214 de la qualité du canal de transmission, la couche MAC sélectionne le couple de paramètres relatifs à la modulation et au codage canal pour obtenir un niveau de qualité de service requis.

La méthode selon l'invention est avantageusement mise en œuvre au niveau de la couche MAC 212 de l'émetteur 201.

La figure 3 illustre un exemple d'application du code correcteur MDS à un ensemble de paquets reçus par la couche MAC.

On considère un nombre K de paquets MAC $PM_1, PM_2, PM_i, PM_K$ qui comportent chacun un entête $H_1, H_2, H_i, H_K$ et une charge utile $P_1, P_2, P_i, P_K$ provenant d'une application 211. Les charges utiles sont de taille variable et on note $L_{MAX}$ la taille maximale d'une charge utile. Le code correcteur MDS est appliqué de la façon suivante. Des zones de bourrage B1,B2,BK sont concaténées après chaque charge utile de sorte à ce que tous les paquets résultants aient la même taille égale à $L_{MAX}$. Ces zones de bourrage sont par exemple constituées de bits tous égaux à 0 et ne sont pas transmises à la couche physique, elles servent uniquement à l'opération de codage mise en œuvre par la couche MAC.

Les K paquets résultants sont empilés pour constituer une matrice à K lignes et $L_{MAX}$ colonnes puis le code correcteur est appliqué colonne par colonne. Pour chaque colonne comprenant K symboles (bits ou octets), un nombre M de symboles de redondance est ainsi généré. Cette opération est réitérée pour l'ensemble des colonnes et conduit à la création de M paquets de redondance $P_{K+1}$, $P_{K+M}$ auxquels sont ajoutés un entête MAC $H_{K+1}, H_{K+M}$. Le nombre M de paquets de redondance est déterminé par application de la méthode selon l'invention décrite ci-dessous. Les N=K+M paquets sont ensuite transmis à la couche physique avec l'information du couple modulation/codage choisi.

Sans sortir du cadre de l'invention, d'autres applications du code correcteur MDS sont envisageables tant qu'elles permettent de générer, à partir de K paquets de données utiles, M paquets de redondance et que les N=M+K paquets résultants sont transmis à la couche physique.

On décrit à présent la méthode, selon l'invention, permettant de sélectionner le couple modulation/codage optimal à appliquer au niveau de la couche physique du système ainsi que le nombre de paquets de redondance, autrement dit le rendement, du code correcteur MDS appliqué au niveau de la couche MAC.

L'objectif recherché est de déterminer les paramètres globaux de modulation et de codage qui permettent d'obtenir un taux de paquets erronés ou perdus inférieur à un taux cible tout en minimisant le débit nécessaire à la transmission du flux de données obtenu ou encore en maximisant l'efficacité spectrale calculée au niveau de la couche MAC.

Pour arriver à cet objectif, la méthode selon l'invention consiste dans un premier temps à déterminer, pour chaque couple modulation/codage disponible pour la couche physique, le nombre minimum de paquets de bits de redondance supplémentaires nécessaire pour atteindre la cible de taux d'erreurs visé. Ce nombre minimal peut éventuellement être nul si le rendement du codage canal de la couche physique est suffisant. Autrement dit, il s'agit de déterminer le rendement du code à effacements à appliquer au niveau de la couche MAC, en amont du codage canal physique et de la modulation.

Dans un deuxième temps, la solution globale associant modulation et codage canal pour la couche physique et code MDS pour la couche MAC nécessitant le débit de transmission minimum ou permettant d'obtenir l'efficacité spectrale maximum au niveau de la couche MAC est retenue.

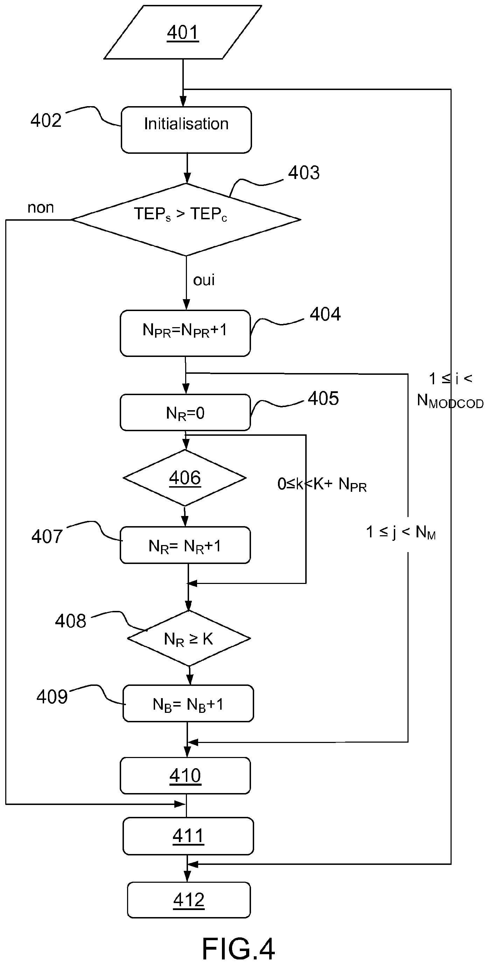

La figure 4 décrit, sur un organigramme, un exemple de réalisation de la méthode selon l'invention.

La mise en œuvre de la méthode nécessite les données d'entrée 401 suivantes : le nombre K de paquets MAC à protéger par application du code correcteur MDS, le point de fonctionnement en rapport signal à bruit visé, le taux d'erreur paquets cible $TEP_C$, les probabilités théoriques de taux d'erreur paquets associées à chacun des couples modulation/codage ainsi que l'efficacité spectrale de chaque couple. L'efficacité spectrale est définie comme le rendement du code correcteur appliqué au niveau de la couche physique que multiplie le nombre de bits par symbole de la modulation choisie. Par exemple, une modulation QPSK associée à un code correcteur de rendement 1/3 présente un rendement global égal à 2/3.

Pour chaque solution modulation/codage disponible, l'ensemble des étapes suivantes sont exécutées.

Dans une étape d'initialisation 402, le taux d'er-

reurs paquets simulé $TEP_s$ est initialisé à 1, le nombre de paquets de bits de redondance à générer au niveau MAC $N_{PR}$ est initialisé à 0 et le nombre de bursts correctement reçus est initialisé à 0. Un burst est constitué de K+M paquets.

Une comparaison 403 du taux d'erreurs paquets simulé $TEP_s$ et du taux d'erreur paquets cible $TEP_c$ est effectuée. Tant que $TEP_s$ est strictement supérieur à $TEP_c$, les étapes suivantes sont exécutées.

Le nombre de paquets de bits de redondance $N_{PR}$ est incrémenté 404.

Le taux d'erreurs paquets simulé $TEP_s$ est ensuite calculé en itérant les étapes suivantes pour un grand nombre $N_M$ de paquets transmis, c'est-à-dire au moins égal à 100 divisé par la probabilité d'erreur théorique.

Le nombre $N_R$ de paquets correctement reçus est initialisé 405 à 0.

On simule ensuite l'impact du canal de propagation sur la transmission des N=K+M paquets générés au niveau de la couche MAC après application du code correcteur MDS. A ce stade, le nombre de paquets de bits de redondance M est égal à $N_{PR}$.

Pour K+ $N_{PR}$ paquets, un test 406 est réalisé en comparant le résultat d'un tirage aléatoire Gaussien avec la probabilité d'erreur théorique. Si ce test est positif, cela signifie que le paquet courant est reçu et on incrémente 407 le nombre $N_R$ de paquets correctement reçus. Une fois ce test réalisé pour les K+$N_{PR}$ paquets, on vérifie 408 si le nombre $N_R$ de paquets correctement reçus est supérieur ou égal à K. Si cela est le cas, le nombre $N_B$ de bursts correctement reçus est incrémenté 409.

Lorsque la boucle sur le nombre $N_M$ de paquets transmis est terminée, on calcule 410 le taux d'erreur simulé $TEP_s$ = 1 - $N_B/N_M$.

Lorsque le taux d'erreur simulé $TEP_s$ devient inférieur au taux d'erreur cible $TEP_c$, on calcule 411 l'efficacité spectrale au niveau de la couche MAC associée à la solution simulée à l'aide de la formule suivante :

$$E = 1 - (TEP_s . K . R)/(K + N_{PR}),$$

où R est le rendement global associé à la solution modulation/codage appliquée à la couche physique. L'expression « efficacité spectrale au niveau de la couche MAC » calculée ici prend en compte l'impact du taux d'erreur simulé et est à distinguer de l'efficacité spectrale calculée au niveau de la couche physique qui prend en compte d'autres paramètres tels que la puissance du signal transmis.

L'efficacité spectrale au niveau de la couche MAC E peut aussi être définie comme le ratio entre le nombre de bits à transmettre en entrée de la couche MAC et le nombre de bits total transmis en sortie de la couche physique.

Lorsque l'efficacité spectrale au niveau de la couche MAC a été calculée pour l'ensemble des solutions disponibles pour la couche physique, dans une dernière étape 412, on retient la solution qui présente l'efficacité spectrale E la plus élevée, pour le point de fonctionnement en rapport signal à bruit retenu.

Dans une variante de réalisation de l'invention, au lieu de l'efficacité spectrale au niveau de la couche MAC, il est possible d'évaluer le débit physique nécessaire pour transmettre le flux de données encodé et modulé selon la solution retenue. Le critère de sélection consiste alors à retenir la solution qui nécessite le débit physique le plus faible. Cette variante nécessite de prendre en compte la taille réelle et maximale des paquets MAC à transmettre.

La méthode décrite ci-dessus est appliquée au niveau de la couche MAC et permet de déterminer les trois paramètres suivantes : la modulation retenue, le code correcteur retenu pour la couche physique et le rendement du code correcteur MDS à appliquer au niveau de la couche MAC. Les deux premiers paramètres sont transmis à la couche physique et le troisième est utilisé pour encoder les paquets MAC de la façon décrite à la figure 3.

La méthode selon l'invention présente notamment l'avantage de ne pas nécessiter de modification importante des équipements de transmission impliqués dans la gestion de la pile protocolaire car les bits de redondance générés par le second code correcteur, dit code MDS, sont directement fournis sous la forme de paquets MAC entiers et ne nécessitent donc pas de gestion complexe pour leur mise en trame. En particulier la méthode proposée ne nécessite pas de fragmentation ou concaténation supplémentaire.

En outre, elle permet de stabiliser la boucle d'adaptation des paramètres de la transmission en fonction de la qualité du canal, autrement dit les paramètres de codage canal et modulation appliqués au niveau de la couche physique.

Elle peut être implémentée à partir d'éléments matériels et/ou logiciels. Elle peut notamment être mise en œuvre en tant que programme d'ordinateur comportant des instructions pour son exécution. Le programme d'ordinateur peut être enregistré sur un support d'enregistrement lisible par un processeur.

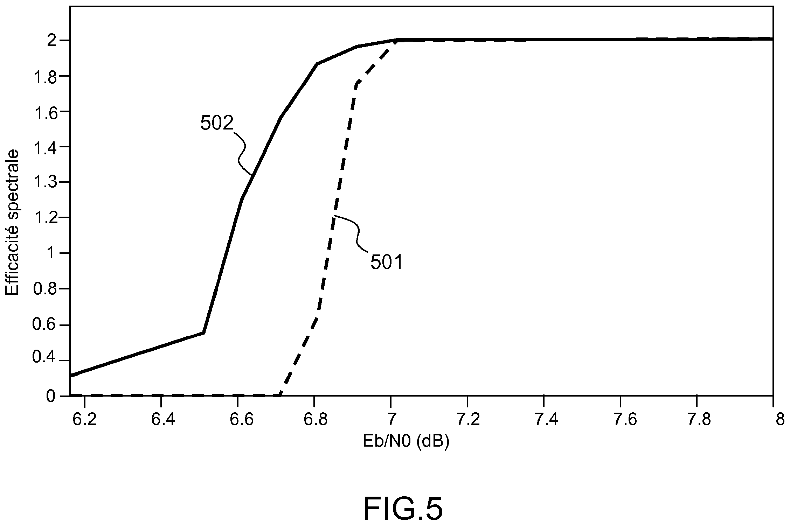

La figure 5 illustre sur un diagramme donnant l'efficacité spectrale en fonction du rapport signal à bruit, les performances obtenues par application de la méthode selon l'invention. La courbe 501 donne l'efficacité spectrale de la solution choisie par application d'une méthode ACM classique, ici une modulation QPSK associée à un code de rendement 2/3. La courbe 502 donne l'efficacité spectrale obtenue par application de la méthode selon l'invention. On voit qu'un gain significatif est obtenu. A rapport signal à bruit identique, l'efficacité spectrale est augmentée. A efficacité spectrale identique, le point de fonctionnement en rapport signal à bruit est abaissé.

## Revendications

1. Méthode d'optimisation des ressources d'une transmission de données configurée selon un modèle du type OSI comprenant au moins une couche d'accès au medium, MAC, et une couche physique, qui consiste, à partir d'un ensemble de couples de modulation et premier code correcteur disponibles destinés à être appliqués au niveau de la couche physique, à :

   - Déterminer (401-411), pour chacun desdits couples, le rendement maximum d'un second code correcteur « Maximum Separable Distance » à appliquer aux données à transmettre avant application du premier code correcteur et de la modulation pour que le taux d'erreur, $TEP_s$, sur les données reçues après transmission sur un canal non parfait soit au plus égal à un taux d'erreur cible, $TEP_c$,
   - ledit second code correcteur étant un code « maximum separable distance » et étant destiné à être appliqué au niveau de la couche d'accès au medium, MAC de sorte à générer une pluralité, $N_{PR}$, de paquets de bits de redondance à partir d'une pluralité, K, de paquets de bits de données reçus complétés par des sections de bourrage pour qu'ils aient tous la même taille,
   - le rendement maximum du second code correcteur étant déterminé en appliquant les sous-étapes de :

      i. déterminer la probabilité théorique d'erreur du couple modulation, premier code correcteur associé au canal de transmission,
      ii. simuler le taux d'erreur, $TEP_s$, d'une transmission, sur un canal modélisé par ladite probabilité théorique, de données protégées par ledit second code correcteur,
      iii. incrémenter le nombre de paquets de bits de redondance générés par ledit second code correcteur jusqu'à ce que le taux d'erreur simulé, $TEP_s$, soit inférieur au taux d'erreur cible, $TEP_c$,

   - évaluer (411) une information représentative du ratio entre le nombre de bits en entrée de la couche d'accès au medium, MAC, et le nombre de bits réellement transmis pour l'ensemble des solutions associant modulation, premier et second codes correcteurs,
   - Sélectionner (412), parmi l'ensemble des solutions associant modulation, premier et second codes correcteurs, celle qui correspond audit ratio le plus élevé

2. Méthode d'optimisation des ressources d'une transmission de données selon la revendication 1 dans laquelle ladite information représentative dudit ratio entre le nombre de bits en entrée de la couche d'accès au medium, MAC, et le nombre de bits réellement transmis est évalué à l'aide de la relation suivante : $E = 1 - (TEP_s.K.R)/(K+N_{PR})$, où $N_{PR}$ est le nombre de paquets de bits de redondance générés pour protéger K paquets de données et R est le rendement du premier code correcteur que multiplie le nombre de bits par symbole de la modulation.

3. Méthode d'optimisation des ressources d'une transmission de données selon l'une des revendications 1 ou 2 dans laquelle ledit second code correcteur est un code en blocs, par exemple un code de Reed Solomon.

4. Méthode d'optimisation des ressources d'une transmission de données selon l'une des revendications précédentes dans laquelle :

   - lesdits taux d'erreurs, $TEP_s$, $TEP_c$, sont des taux de paquets MAC erronés,
   - le couple modulation, premier code correcteur retenu est transmis à la couche physique pour application dudit premier code correcteur et de ladite modulation aux paquets de données et aux paquets de redondance fournis par la couche d'accès au medium.

5. Méthode d'optimisation des ressources d'une transmission de données selon la revendication 4 dans laquelle lesdits K paquets de données complétés sont entrelacés au préalable à l'application du second code correcteur.

6. Méthode d'optimisation des ressources d'une transmission de données selon la revendication 5 dans laquelle lesdits paquets de bits de redondance sont de tailles égales entre elles et à celles desdits paquets de données complétés.

7. Système de transmission de données comprenant des moyens pour mettre en œuvre la méthode d'optimisation des ressources selon l'une des revendications 1 à 6.

8. Système de transmission de données selon la revendication 7 dans laquelle lesdits moyens comportent au moins une couche d'accès au medium, une couche physique et une information sur la qualité du canal de propagation.

9. Produit programme d'ordinateur comportant des instructions pour l'exécution de la méthode d'optimisation des ressources selon l'une des revendications 1 à 6 lorsque le programme est exécuté par un processeur.

**Patentansprüche**

1. Verfahren zum Optimieren der Ressourcen einer Datenübertragung, die nach einem Modell des OSI-Typs konfiguriert ist, das mindestens eine MAC-Medienzugriffsschicht und eine physikalische Schicht umfasst, das, auf der Basis eines Satzes von verfügbaren Paaren von Modulation und erstem Korrekturcode, der zur Anwendung auf die physikalische Schicht bestimmt ist, Folgendes beinhaltet:

     - Bestimmen (401-411), für jedes der Paare, des maximalen Wirkungsgrades eines zweiten Korrekturcodes "maximaler trennbarer Abstand", der vor der Anwendung des ersten Korrekturcodes und der Modulation auf die zu übertragenden Daten anzuwenden ist, damit die Fehlerrate $TEP_S$ bei den nach der Übertragung auf einem nicht perfekten Kanal empfangenen Daten höchstens gleich einer Zielfehlerrate $TEP_C$ ist,
     - wobei der zweite Korrekturcode ein Code "maximaler trennbarer Abstand" ist, der an der MAC-Medienzugriffsschicht anzuwenden ist, um eine Mehrzahl $N_{PR}$ von Redundanzbitpaketen aus einer Mehrzahl K von empfangenen Datenbitpaketen zu erzeugen, die durch Stopfabschnitte ergänzt werden, so dass alle die gleiche Größe haben,
     - wobei der maximale Wirkungsgrad des zweiten Korrekturcodes durch Anwenden der folgenden Unterschritte bestimmt wird:

         i. Bestimmen der theoretischen Fehlerwahrscheinlichkeit des Paares aus Modulation und erstem Korrekturcode, der mit dem Übertragungskanal assoziiert ist,
         ii. Simulieren der Fehlerrate $TEP_S$ einer Übertragung von Daten auf einem durch die theoretische Wahrscheinlichkeit modellierten Kanal, die durch den zweiten Korrektorcode geschützt sind,
         iii. Erhöhen der Anzahl von durch den zweiten Korrekturcode erzeugten Redundanzbitpaketen, bis die simulierte Fehlerrate $TEP_S$ kleiner als die Zielfehlerrate $TEP_C$ ist,

     - Bewerten (411) einer Information, die das Verhältnis zwischen der Anzahl von Bits am Eingang der MAC-Medienzugriffsschicht und der Anzahl der tatsächlich übertragenen Bits für den Satz von Lösungen darstellen, die Modulation, ersten und zweiten Korrekturcode assoziieren,
     - Auswählen (412) der Lösung aus dem Satz von Lösungen, die Modulation, ersten und zweiten Korrektorcode assoziieren, die dem höchsten Verhältnis entspricht.

2. Verfahren zum Optimieren der Ressourcen einer Datenübertragung nach Anspruch 1, wobei die Information, die das Verhältnis zwischen der Anzahl von Bits am Eingang der MAC-Medienzugriffsschicht und der Anzahl der tatsächlich übertragenen Bits darstellt, anhand der folgenden Beziehung bewertet wird: $E = 1-(TEP_S.K.R)/(K+N_{PR})$, wobei $N_{PR}$ die Anzahl von Redundanzbitpaketen ist, die zum Schützen von K Datenpaketen erzeugt werden, und R der Wirkungsgrad des ersten Korrekturcodes multipliziert mit der Anzahl der Bits pro Symbol der Modulation ist.

3. Verfahren zum Optimieren der Ressourcen einer Datenübertragung nach Anspruch 1 oder 2, wobei der zweite Korrekturcode ein Blockcode, beispielsweise ein Reed-Solomon-Code, ist.

4. Verfahren zum Optimieren der Ressourcen einer Datenübertragung nach einem der vorherigen Ansprüche, wobei:

     - die Fehlerraten $TEP_S$, $TEP_C$ Raten von fehlerhaften MAC-Paketen sind,
     - das Paar aus Modulation und erstem verwendetem Korrekturcode an die physikalische Schicht zur Anwendung des ersten Korrekturcodes und der Modulation auf die Datenpakete und die Redundanzpakete übertragen wird, die von der Medienzugriffsschicht bereitgestellt werden.

5. Verfahren zum Optimieren der Ressourcen einer Datenübertragung nach Anspruch 4, wobei die K ergänzten Datenpakete vor der Anwendung des zweiten Korrekturcodes verschachtelt werden.

6. Verfahren zum Optimieren der Ressourcen einer Datenübertragung nach Anspruch 5, wobei die Redundanzbitpakete untereinander und relativ zu den vollständigen Datenpaketen gleich groß sind.

7. Datenübertragungssystem das Mittel zum Durchführen des Verfahrens zum Optimieren der Ressourcen nach einem der Ansprüche 1 bis 6 umfasst.

8. Datenübertragungssystem nach Anspruch 7, wobei die Mittel mindestens eine Medienzugriffsschicht, eine physikalische Schicht und eine Information über die Qualität des Ausbreitungskanals umfassen.

9. Computerprogrammprodukt das Befehle zur Ausführung des Verfahrens zum Optimieren der Ressourcen nach einem der Ansprüche 1 bis 6 umfasst, wenn das Programm von einem Prozessor ausgeführt wird.

## Claims

1. Method for optimizing the resources of a data transmission, configured according to an OSI-type model comprising at least a medium access layer, MAC, and a physical layer, consisting, based on a set of available pairs of modulation and first correcting code intended to be applied on the physical layer, in:

   - determining (401-411), for each of said pairs, the maximum yield of a second correcting code, called "Maximum Separable Distance", to be applied to the data to be transmitted before application of the first correcting code and of the modulation so that the error rate, $TEP_S$, in the data received after transmission on an imperfect channel is at most equal to a target error rate, $TEP_C$,
   - said second correcting code being a "Maximum Separable Distance" and being intended to be applied on the medium access layer, MAC, so as to generate a plurality, $N_{PR}$, of packets of redundancy bits from a plurality, K, of packets of received data bits supplemented with padding sections so that they all have the same size,
   - the maximum yield of the second correcting code being determined by applying the following sub-steps:

      i. determining the theoretical probability of error of the pair consisting of modulation and first correcting code associated with the transmission channel,
      ii. simulating the error rate, $TEP_S$, of a transmission of data protected by said second correcting code, on a channel modelled by said theoretical probability,
      iii. incrementing the number of packets of redundancy bits generated by said second correcting code until the simulated error rate, $TEP_S$, is less than the target error rate, $TEP_C$,

   - evaluating (411) an item of information representative of the ratio between the number of bits at input of the medium access layer, MAC, and the number of bits actually transmitted for the set of solutions associating modulation, first and second correcting codes,
   - selecting (412), among the set of solutions associating modulation, first and second correcting codes, the solution which corresponds to the highest ratio.

2. Method for optimizing the resources of a data transmission according to claim 1, wherein said item of information representative of said ratio between the number of bits at input of the medium access layer, MAC, and the number of bits actually transmitted is evaluated thanks to the following relation: $E=1-(TEP_S.K.R)/(K+N_{PR})$, where $N_{PR}$ is the number of packets of redundancy bits generated to protect K data packets and R is the rate of the first correcting code that is multiplied by the number of bits per symbol of the modulation.

3. Method for optimizing the resources of a data transmission according to one of claims 1 or 2, wherein said second correcting code is a block code, for example a Reed Solomon code.

4. Method for optimizing the resources of a data transmission according to one of the preceding claims, wherein:

   - said error rates, $TEP_S$, $TEP_C$, are erroneous MAC packet rates,
   - the selected pair consisting of modulation and first correcting code is transmitted to the physical layer for application of said first correcting code and of said modulation to the data packets and to the redundancy packets provided by the medium access layer.

5. Method for optimizing the resources of a data transmission according to claim 4, wherein said K supplemented data packets are interleaved before the application of the second correcting code.

6. Method for optimizing the resources of a data transmission according to claim 5, wherein said packets of redundancy bits are of equal size and are equal to the sizes of said supplemented data packets.

7. Data transmission system comprising means for implementing the method for optimizing the resources according to one of claims 1 to 6.

8. Data transmission system according to claim 7, wherein said means have at least one medium access layer, a physical layer and an item of information about the quality of the propagation channel.

9. Computer program product comprising instructions for the execution of the method for optimizing the resources according to one of claims 1 to 6 when the program is executed by a processor.

FIG.1

FIG.2

FIG.3

401

402 — Initialisation

403

non ← TEP$_s$ > TEP$_c$

oui

N$_{PR}$=N$_{PR}$+1 — 404

1 ≤ i <
N$_{MODCOD}$

N$_R$=0 — 405

406

0≤k<K+ N$_{PR}$

407 — N$_R$= N$_R$+1

1 ≤ j < N$_M$

408 — N$_R$ ≥ K

409 — N$_B$= N$_B$+1

410

411

412

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1296494 A